# EUROPÄISCHE PATENTSCHRIFT

(11) **EP 2 552 343 B1**
(45) Veröffentlichungstag und Bekanntmachung des Hinweises auf die Patenterteilung: **02.05.2018**
(21) Anmeldenummer: 11719192.4
(22) Anmeldetag: 04.05.2011
(51) Int. Cl.: A61C 13/00, A61C 9/00, A61C 11/00

(54) **VERFAHREN ZUM HERSTELLEN VON ZAHNERSATZ ODER ZAHNTEILERSATZ**
METHOD FOR PRODUCING A DENTAL PROSTHESIS OR PARTIAL DENTAL PROSTHESIS
PROCÉDÉ DE FABRICATION D'UNE PROTHÈSE DENTAIRE OU D'UNE PROTHÈSE DENTAIRE PARTIELLE

(30) Priorität: 07.05.2010 DE 102010019731
(43) Veröffentlichungstag der Anmeldung: 06.02.2013
(73) Patentinhaber: Dekema Dental-Keramiköfen GmbH, 83395 Freilassing (DE)
(72) Erfinder: MILLER, Stephan, 83278 Traunstein (DE); GEIER, Andreas, 39010 Tesimo (IT)
(74) Vertreter: Manitz Finsterwald Patentanwälte PartmbB
(86) Internationale Anmeldenummer: PCT/EP2011/002224
(87) Internationale Veröffentlichungsnummer: WO 2011/138024

(56) Entgegenhaltungen:
- EP-A1- 1 955 671
- DE-A1-102005 034 803
- DE-U1-202005 010 987

## Beschreibung

Die vorliegende Erfindung betrifft ein Verfahren zum Herstellen von Zahnersatz oder Zahnteilersatz, bei welchem ein Modell des Gebisses oder Teils des Gebisses des zu behandelnden Patienten erstellt, anhand des Modells der Zahnersatz oder Teilersatz hergestellt und in das Modell eingesetzt sowie die Qualität des Ersatzes durch Bewegen von Ober- und Unterkiefer des Gebissmodells relativ zueinander überprüft wird. In diesem Zusammenhang wird auf das Dokument DE102005034803 A1 verwiesen. Bei herkömmlichen Verfahren der genannten Art wird ein Gebissmodell des Patienten erstellt und mit dem eingesetzten Zahnersatz oder -teilersatz in einen so genannten Artikulator übertragen. Mit dem Artikulator können die Gebissbewegungen, also die Bewegung von Oberkiefer zu Unterkiefer zueinander, simuliert werden, um die Qualität des Zahnersatzes zu überprüfen. Um eine störungsfreie und zugleich funktionelle Okklusion auch bei exzentrischen Unterkieferpositionen zu gewährleisten, sind teiljustierbare Artikulatoren bekannt, mit denen die Kondylenbahnneigung und der Bennettwinkel nach den Vorgaben des Patienten eingestellt werden können. Die Einstellung eines solchen Artikulators ist verhältnismäßig kompliziert und erfordert eine erhebliche Erfahrung des Zahntechnikers.

Zur Übertragung der individuell am Patienten gemessenen Parameter in den Artikulator wird ein so genannter Gesichtsbogen verwendet. Dieser dient der Lagebestimmung des Oberkiefers im Verhältnis zur Schädelbasis bzw. dem Kiefergelenk. Dazu wird der Gesichtsbogen beidseitig am äußeren Gehörgang über so genannte Oliven sowie mit einer Nasenstütze am Kopf des Patienten fixiert. Damit kann die so genannte Camper'sche Ebene oder Frankfurter Horizontale bestimmt werden. Damit kann dann auch der Kondylenbahnwinkel bestimmt werden, nämlich als Winkel zwischen der genannten Camper'sehen Ebene oder Frankfurter Horizontale einerseits und der Verbindung zwischen dem zentrischen Ausgangspunkt und der Protrusionsstellung des Patientengebisses andererseits.

Der Erfindung liegt die Aufgabe zugrunde, das Verfahren der eingangs genannten Art zu verbessern und insbesondere zu vereinfachen.

Diese Aufgabe wird durch ein Verfahren gemäß Anspruch 1 gelöst.

Durch die Verwendung eines virtuellen Gebissmodells, in welches der ebenfalls virtuell erstellte Zahnersatz oder -teilersatz virtuell eingesetzt wird, ist die Herstellung und Prüfung des Zahnersatzes oder -teilersatzes deutlich vereinfacht. Die vom Patienten abgenommenen Parameter können in das virtuelle Modell übertragen und zur Konstruktion des Zahnersatzes verwendet werden. Dieser kann dann im Modell durch virtuelles Bewegen des Gebisses überprüft werden. Dies kann automatisch erfolgen, insbesondere auf elektronischem Wege unter Verwendung einer geeigneten Software. Es müssen daher keine mechanischen Einstellungen am Artikulator vorgenommen werden. Auch entfällt die Gefahr, dass eingestellte Parameter bei der Übertragung versehentlich verändert werden und das Modell nicht mehr den Patientenparametern exakt entspricht.

Bevorzugt wird zum Erstellen des virtuellen Gebissmodells das Gebiss oder Teilgebiss des Patienten mit einem elektronischen Aufnahmesystem aufgenommen, die aufgenommenen Daten, sofern noch nicht gegeben, digitalisiert und die digitalisierten Daten zu dem virtuellen Modell verarbeitet. Als elektronisches Aufnahmesystem kann eine Digitalkamera verwendet werden, die bereits digitalisierte Daten liefert, die unmittelbar weiterverarbeitet werden können. Die Erstellung des virtuellen Modells ist dadurch in besonders vorteilhafter Weise möglich.

Nach einer bevorzugten Ausgestaltung der Erfindung werden die Zähne nacheinander einzeln aufgenommen, und die Aufnahmen werden durch ein Bildverarbeitungssystem zu einem virtuellen Gebiss oder Teilgebiss zusammengesetzt. Das Bildverarbeitungssystem kann dabei insbesondere ein Bilderkennungssystem umfassen, welches die aufgenommenen Zähne erkennt und dadurch geeignet ist, die nacheinander aufgenommenen Zähne automatisch zu einem Gebiss zusammenzusetzen. Ein manuelles aneinander Anbinden nacheinander aufgenommener Zähne oder Zahnteile ist dadurch nicht erforderlich.

Zur Einbeziehung des Kiefergelenks in das virtuelle Modell wird nach einer weiteren Ausgestaltung der Erfindung das Gebiss oder Teilgebiss des Patienten als Ganzes in Relation zum Kopf oder einem Teil des Kopfes des Patienten aufgenommen, beispielsweise indem ein Aufnahmesystem auf einem Gestell angeordnet wird, welches gegenüber dem Kopf oder Kopfteil des Patienten fixiert ist. Ein solches Gestell kann in Art des bekannten Gesichtsbogens konstruiert sein, indem das Gestell an einem oder beiden Gehörgangknochen und an der Nasenwurzel abgestützt ist. Die elektronischen Aufnahmemittel können auf dem Bogen angeordnet sein, um von dort das Gebiss oder Teilgebiss des Patienten aufzunehmen oder auch unabhängig davon im Raum. In diesem Fall wird die Relation zum Kopf bevorzugt über Referenzpunkte hergestellt, die am Kopf des Patienten oder auch am Gestell angebracht sein können. Über das Gestell kann wie beim bekannten Gesichtsbogen die so genannte Camper'sche Ebene oder Frankfurter Horizontale bestimmt werden, um das aufgenommene Gebiss ins Verhältnis zum Kopf des Patienten zu setzen.

Nach einer bevorzugten Ausgestaltung der Erfindung wird das Gebiss oder Teilgebiss als Ganzes in zwei oder mehr unterschiedlichen Relativstellungen des Unterkiefers zum Oberkiefer, auch kontinuierlich aufgenommen. Insbesondere wird das Gebiss oder Teilgebiss in rechts- und linksexkursiver Stellung sowie in protrudierter Stellung aufgenommen. Aus den dabei erhaltenen Daten kann die Kondylenbahn elektronisch berechnet werden. Diese Daten werden dann in das virtuelle Gebissmodell eingearbeitet. Auf diese Weise kann mit dem virtuellen Modell die Qualität des Zahnersatzes oder -teilersatzes auch für exzentrische Unterkieferpositionen überprüft werden. Damit kann auf virtuellem Wege eine störungsfreie und zugleich funktionelle Okklusion gewährleistet werden.

Nach einer weiteren Ausgestaltung der Erfindung wird während der Aufnahme des Gebisses oder Teilgebisses ein Kalibrierklotz mit bekannten Abmessungen im Aufnahmebereich angeordnet und mit aufgenommen. Beispielsweise kann der Patient den Kalibrierklotz zwischen die Zähne nehmen. Auf diese Weise können besonders exakte Daten unter Verwendung des Kalibrierklotzes als Bezugseinheit erhalten werden.

Erfindungsgemäß werden zusätzlich die vom Patienten beim Kauen aufgebrachten Bisskräfte zumindest im Bereich des Zahnersatzes oder -teilersatzes ermittelt und daraus eine Eindringtiefe der Zähne in den Kiefer berechnet und bei der Erstellung und/ oder Überprüfung des Gebissmodells berücksichtigt. Es ist bekannt, dass Zähne nicht starr im Kiefer verankert sind sondern bei Belastung in den Kiefer eintauchen, also insbesondere beim Kauen. Durch Bestimmung der Bisskräfte des Patienten kann die dadurch veränderte Lage der Zähne im Gebiss berechnet und bei der Herstellung und Überprüfung des Zahnersatzes im Modell berücksichtigt werden. Damit kann eine störungsfreie und funktionelle Okklusion noch besser gewährleistet werden.

Die Bisskräfte werden bevorzugt dynamisch und synchron zur aufgenommenen Bewegung des Gebisses oder Teilgebisses aufgenommen und in derselben Weise im Modell berücksichtigt. Auf diese Weise kann die Position der Zähne im Modell exakt an die tatsächliche Position während des Kauens angepasst und überprüft werden.

Das erfindungsgemäße virtuelle Modell umfasst bevorzugt die Rotationsachse und/oder die horizontale Kondylenbahnneigung und/oder den Bennettwinkel und/oder die Retrusion und/oder den Immediate Sideshift und/oder gestufte Gleitführungen des Kiefergelenks. Je mehr der genannten Parameter berücksichtigt werden, desto besser ist die Aussagekraft der Überprüfung des Zahnersatzes oder -teilersatzes mit dem erfindungsgemäßen virtuellen Modell. Aufgrund der Verwendung eines virtuellen Modells können die genannten Parameter ohne weiteres gleichzeitig berücksichtigt werden, so dass eine hohe Aussagekraft gewährleistet ist.

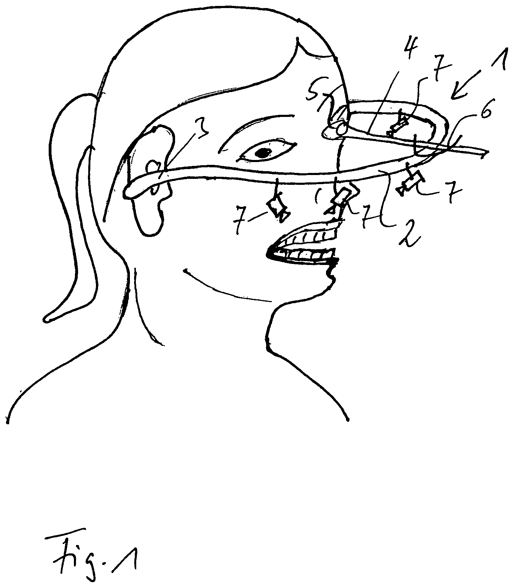

Ein Ausführungsbeispiel eines bei dem erfindungsgemäßen Verfahren verwendbaren elektronischen Aufnahmesystems ist in der Zeichnung schematisch dargestellt und wird nachfolgend beschrieben. Es zeigt, als einzige Figur:
- 3Fig. 1: ein Gestell mit Digitalkameras bei einem Patienten.
Das Gestell 1 ist in Art eines Gesichtsbogens ausgebildet und umfasst einen das Gesicht des Patienten umspannenden Bogen 2, an dessen beiden Enden verstellbare und fixierbare Oliven 3 vorgesehen sind, die in den jeweiligen Gehörgang eines Patienten eingesetzt werden können. Des Weiteren umfasst das Gestell 1 eine Stange 4, die an ihrem einen Ende einen Pfropfen 5 aufweist, der an der Nasenwurzel eines Patienten abgestützt werden kann. Die Stange 4 ist über eine Halterung 6 am mittleren Abschnitt des Bogens 2 gehaltert. Die Halterung 6 ist dabei so ausgebildet, dass die Stange 4 in Richtung auf die Nasenwurzel des Patienten längsverstellbar und fixierbar ist.

Wie man in Fig. 1 erkennt, ist das Gestell 1 mit mehreren Digitalkameras 7 versehen, die über den Bogen 2 verteilt angeordnet sind. Die Kameras 7 können dabei insbesondere in allen Raumrichtungen verstellbar mit dem Gestell 1 verbunden sein. Auf diese Weise können die Kameras 7 in geeigneter Weise auf das Gebiss des Patienten ausgerichtet werden, um dieses aufzunehmen.

Zur Aufnahme des Gebisses oder Teilgebisses eines Patienten wird das Gestell 1 über die Oliven 3 an den beiden Gehörgängen und über die Stange 4 an der Nasenwurzel des Patienten fixiert. Mit einer entsprechenden, hier nicht dargestellten Messeinrichtung kann bei dem so eingestellten Gestell die Camper'sehe Ebene oder Frankfurter Horizontale gemessen werden. Diese Daten werden für die Erstellung des virtuellen Modells verwendet. Sobald das Gestell 1 am Patienten fixiert ist, wird dessen Gebiss als Ganzes oder als Teilgebiss mit den Kameras 7 aufgenommen. Die digitalisierten Daten der Kameras 7 werden dann zusammen mit den Daten der Camper'schen Ebene oder Frankfurter Horizontalen für das virtuelle Modell verarbeitet. Zur Erstellung des virtuellen Modells werden des Weiteren die Zähne des Patienten einzeln aufgenommen. Dies kann mit einer einfachen handgeführten Kamera erfolgen, wenn eine Bildverarbeitungssoftware verwendet wird, die die aufgenommenen Zähne automatisch passgenau aneinanderreiht. Auch diese Daten werden dann zur Erstellung des virtuellen Modells verwendet.

Die Erstellung des virtuellen Modells erfolgt über eine geeignete Software in einem Rechner. Mit dem Rechner wird dann anhand des Modells des Gebisses oder Teilgebisses der Zahnersatz konstruiert. Zur Überprüfung des virtuellen Zahnersatzes oder -teilersatzes wird dann das virtuelle Modell in Art eines Artikulators verwendet, indem das virtuelle Gebiss virtuell bewegt wird, insbesondere in die exzentrischen Unterkieferpositionen. Auftretende Störungen wie Kollisionen zwischen den Zähnen werden dabei festgestellt und angezeigt. Sind die Ergebnisse zufrieden stellend, werden die Daten des virtuellen Zahnersatzes oder -teilersatzes zur Herstellung des realen Zahnersatzes oder -teilersatzes verwendet, was bei geeigneter Software unmittelbar mit den Modelldaten erfolgen kann.

Bei der Erstellung und Überprüfung des Modells können auch zuvor ermittelte Daten über die Bisskräfte des Patienten berücksichtigt werden. Hierfür wird aus den Bisskräften die Eintauchtiefe der Zähne in die Kiefer berechnet. Die Aufnahme der Bisskräfte erfolgt bevorzugt dynamisch und synchron zur Bewegung des über die Kameras 7 aufgenommenen Gebisses. Die Bisskräfte können beispielsweise über Dehnungsmessstreifen erfasst werden. Das Gebissmodell umfasst bevorzugt insbesondere die Rotationsachse, die horizontalen Kondylenbahnneigungen, den Bennettwinkel, die Retrusion, den Immediate Sideshift und gestufte Gleitführungen der Kiefergelenke. Damit kann eine sehr genaue Herstellung und aussagekräftige Überprüfung des Zahnersatzes oder -teilersatzes erfolgen.

### Bezugszeichenliste

- 1: Gestell
- 2: Bogen
- 3: Olive
- 4: Stange
- 5: Pfropfen
- 6: Halterung
- 7: Kamera

## Patentansprüche

1. Verfahren zum Herstellen von Zahnersatz oder Zahnteilersatz, bei welchem ein Modell des Gebisses oder Teils des Gebisses des zu behandelnden Patienten erstellt, anhand des Modells der Zahnersatz oder Teilersatz hergestellt und in das Modell eingesetzt sowie die Qualität des Ersatzes durch Bewegen von Ober- und Unterkiefer des Gebissmodells relativ zueinander überprüft wird,
**dadurch gekennzeichnet, dass**
das Gebissmodell unter Einbeziehung des Kiefergelenks als virtuelles Modell erstellt, der Ersatz virtuell hergestellt und in das Modell eingesetzt sowie die Qualität des Ersatzes durch virtuelles Bewegen des Gebisses über das virtuelle Kiefergelenk überprüft wird und dass die vom Patienten beim Kauen aufgebrachten Bisskräfte zumindest im Bereich des Zahnersatzes oder -teilersatzes ermittelt werden, und dass daraus eine Eindringtiefe der Zähne in den Kiefer berechnet und bei der Erstellung und/oder Überprüfung des Gebissmodells berücksichtigt wird.

2. Verfahren nach Anspruch 1,
**dadurch gekennzeichnet, dass**
die Bisskräfte dynamisch und synchron zur aufgenommenen Bewegung des Gebisses oder Teilgebisses aufgenommen und in derselben Weise im Modell berücksichtigt werden.

3. Verfahren nach Anspruch 2,
**dadurch gekennzeichnet, dass**
zum Erstellen des virtuellen Gebissmodells das Gebiss oder Teilgebiss des Patienten mit einem elektronischen Aufnahmesystem, insbesondere einer oder mehrerer Digitalkameras (7), aufgenommen, die aufgenommenen Daten, falls nicht gegeben, digitalisiert und die digitalisierten Daten zu dem virtuellen Modell verarbeitet werden.

4. Verfahren nach Anspruch 2 oder 3,
**dadurch gekennzeichnet, dass**
die Zähne nacheinander einzeln aufgenommen und die Aufnahmen durch ein Bildverarbeitungssystem, insbesondere mit Bilderkennung, zu einem virtuellen Gebiss oder Teilgebiss zusammengesetzt werden.

5. Verfahren nach einem der Ansprüche 2 bis 4,
**dadurch gekennzeichnet, dass**
zur Einbeziehung des Kiefergelenks das Gebiss oder Teilgebiss des Patienten als Ganzes in Relation zum Kopf oder einem Teil des Kopfes des Patienten aufgenommen, digitalisiert und gespeichert wird.

6. Verfahren nach Anspruch 5,
**dadurch gekennzeichnet, dass**
die Relation zum Kopf des Patienten über am Kopf des Patienten oder an einem gegenüber dem Kopf des Patienten fixierten Gestell angebrachte Referenzpunkte hergestellt wird.

7. Verfahren nach Anspruch 5 oder 6,
**dadurch gekennzeichnet, dass**
das Gebiss oder Teilgebiss in Relation zum Kopf oder Kopfteil des Patienten aufgenommen wird, indem ein Aufnahmesystem auf einem Gestell (1) angeordnet wird, welches gegenüber dem Kopf oder Kopfteil des Patienten fixiert ist.

8. Verfahren nach Anspruch 7,
**dadurch gekennzeichnet, dass**
das Gestell (1) an einem oder beiden Gehörgangsknochen und an der Nasenwurzel des Patienten abgestützt wird.

9. Verfahren nach einem der Ansprüche 5 bis 8,
**dadurch gekennzeichnet, dass**
das Gebiss oder Teilgebiss als Ganzes in zwei oder mehr unterschiedlichen Relativstellungen des Unterkiefers zum Oberkiefer, insbesondere auch kontinuierlich, aufgenommen wird.

10. Verfahren nach einem der Ansprüche 5 bis 9,
**dadurch gekennzeichnet, dass**
aus den Aufnahmedaten des Gebisses als Ganzes, insbesondere den Aufnahmedaten in unterschiedlichen Relativpositionen, die Form des Kiefergelenks berechnet und in das virtuelle Gebissmodell eingearbeitet wird.

11. Verfahren nach einem der Ansprüche 2 bis 10,
**dadurch gekennzeichnet, dass**
während der Aufnahme des Gebisses oder Teilgebisses ein Kalibrierklotz mit bekannten Abmessungen im Aufnahmebereich angeordnet und mit aufgenommen wird.

12. Verfahren nach einem der Ansprüche 2 bis 11,
**dadurch gekennzeichnet, dass**
das virtuelle Modell die Rotationsachse und/oder die horizontale Kondylenbahnneigung und/oder den Bennettwinkel und/oder die Retrusion und/oder den Immediate Sideshift und/oder gestufte Gleitführungen des Kiefergelenks umfasst.

## Claims

1. A method for manufacturing a dental prosthesis or partial dental prosthesis, in which a model of the dentition or of a part of the dentition of the patient to be treated is prepared; the dental prosthesis or partial dental prosthesis is manufactured with reference to the model and is inserted into the model; and the quality of the prosthesis is checked by a moving of the upper and lower jaws of the dentition model relative to one another,
**characterized in that**
the dentition model is prepared as a virtual model while including the temporomandibular joint, the prosthesis is produced virtually and inserted into the model and the quality of the prosthesis is checked by a virtual moving of the dentition over the virtual temporomandibular joint; and **in that** the biting forces of the patient on chewing are at least determined in the region of the dental prosthesis or partial dental prosthesis; and **in that** a penetration depth of the teeth into the jaw is calculated from this and is taken into account in the preparation and/or check of the dentition model.

2. A method in accordance with claim 1,
**characterized in that**
the biting forces are recorded dynamically and synchronously with respect to the recorded moving of the dentition or partial dentition and are taken into account in the model in the same manner.

3. A method in accordance with claim 2,
**characterized in that**,
to prepare the virtual dentition model, the dentition or partial dentition of the patient is recorded using an electronic recording system, in particular one or more digital cameras (7); the recorded data are digitized if not already done; and the digitized data are processed to form the virtual model.

4. A method in accordance with claim 2 or claim 3,
**characterized in that**
the teeth are recorded individually after one another and the shots are combined by an image processing system, in particular comprising image recognition, to form a virtual dentition or partial dentition.

5. A method in accordance with any one of the claims 2 to 4, **characterized in that**,
to include the temporomandibular joint, the dentition or partial dentition of the patient is recorded as a whole in relation to the head or to a part of the head of the patient, is digitized and is stored.

6. A method in accordance with claim 5,
**characterized in that**
the relation to the head of the patient is established via reference points applied to the head of the patient or to a frame fixed with respect to the head of the patient.

7. A method in accordance with claim 5 or claim 6,
**characterized in that**
the dentition or partial dentition is recorded in relation to the head or to a head part of the patient **in that** a recording system is arranged at a frame (1) which is fixed with respect to the head or to a head part of the patient.

8. A method in accordance with claim 7,
**characterized in that**
the frame (1) is supported at one or at both auditory canal bones and at the root of the nose of the patient.

9. A method in accordance with any one of the claims 5 to 8, **characterized in that**
the dentition or partial dentition is recorded, in particular also recorded continuously, as a whole in two or more different relative positions of the lower jaw to the upper jaw.

10. A method in accordance with any one of the claims 5 to 9,
**characterized in that**
the shape of the temporomandibular joint is calculated from the recorded data of the dentition as a whole, in particular from the recorded data in different relative positions, and is incorporated into the virtual dentition model.

11. A method in accordance with any one of the claims 2 to 10,
**characterized in that**
a calibration block having known dimensions is arranged in the recording zone and is also recorded during the recording of the dentition or partial dentition.

12. A method in accordance with any one of the claims 2 to 11,
**characterized in that**
the virtual model comprises the axis of rotation and/or the horizontal condylar path inclination and/or the Bennet angle and/or the retrusion and/or the immediate side shift and/or stepped sliding guides of the temporomandibular joint.

## Revendications

1. Procédé de fabrication d'une prothèse dentaire ou d'une prothèse dentaire partielle, dans lequel un modèle de la dentition ou d'une partie de la dentition du patient à traiter est réalisé, la prothèse dentaire ou la prothèse dentaire partielle est fabriquée en se basant sur le modèle et elle est mise en place dans le modèle, et la qualité de la prothèse est vérifiée par mouvement du maxillaire et de la mandibule du modèle de la dentition l'un par rapport à l'autre,
**caractérisé en ce que**
le modèle de dentition est créé en tant que modèle virtuel en intégrant l'articulation temporo-mandibulaire, la prothèse est réalisée virtuellement et elle est mise en place dans le modèle, et la qualité de la prothèse est vérifiée par un mouvement virtuel de la dentition via l'articulation temporo-mandibulaire virtuelle, et **en ce que**
les forces d'occlusion exercées par le patient pendant la mastication sont déterminées au moins dans la zone de la prothèse dentaire ou de la prothèse dentaire partielle, et **en ce que**
la profondeur de pénétration des dents dans la mâchoire en est calculée et prise en compte lors de la création et/ou de la vérification du modèle de la dentition.

2. Procédé selon la revendication 1,
**caractérisé en ce que**
les forces d'occlusion sont enregistrées de façon dynamique et synchrone au mouvement enregistré de la dentition ou de la dentition partielle et elles sont prises en compte de la même manière dans le modèle.

3. Procédé selon la revendication 2,
**caractérisé en ce que**
pour créer le modèle virtuel de la dentition, la dentition ou la dentition partielle du patient est enregistrée au moyen d'un système d'enregistrement électronique, en particulier au moyen d'une ou de plusieurs caméras numériques (7), les données enregistrées sont, si elles ne le sont pas déjà, numérisées et les données numérisées sont traitées pour donner le modèle virtuel.

4. Procédé selon la revendication 2 ou 3,
**caractérisé en ce que**
les dents sont enregistrées individuellement les unes après les autres et les enregistrements sont composés par un système de traitement d'image, en particulier pourvu d'une reconnaissance d'images, pour donner une dentition virtuelle ou une dentition partielle virtuelle.

5. Procédé selon l'une des revendications 2 à 4,
**caractérisé en ce que**
pour intégrer l'articulation temporo-mandibulaire, la dentition ou de la dentition partielle du patient est enregistrée dans son ensemble en relation avec la tête ou avec une partie de la tête du patient, elle est numérisée et mémorisée.

6. Procédé selon la revendication 5,
**caractérisé en ce que**
la relation avec la tête du patient est établie par des points de référence disposés sur la tête du patient ou sur une monture fixée en regard de la tête du patient.

7. Procédé selon la revendication 5 ou 6,
**caractérisé en ce que**
la dentition ou la dentition partielle est enregistrée en relation avec la tête ou avec une partie de la tête du patient du fait qu'un système d'enregistrement est agencé sur une monture (1) qui est fixée en regard de la tête ou de la partie de la tête du patient.

8. Procédé selon la revendication 7,
**caractérisé en ce que**
la monture (1) est appuyée sur un ou sur les deux os du conduit auditif et sur la racine du nez du patient.

9. Procédé selon l'une des revendications 5 à 8,
**caractérisé en ce que**
la dentition ou de la dentition partielle du patient est enregistrée dans son ensemble dans deux ou plusieurs positions relatives différentes de la mandibule par rapport au maxillaire, en particulier également en continu.

10. Procédé selon l'une des revendications 5 à 9,
**caractérisé en ce que**
à partir des données enregistrées de la dentition dans son ensemble, en particulier à partir des données enregistrées dans différentes positions relatives, la forme de l'articulation temporo-mandibulaire est calculée et incorporée dans le modèle virtuel de la dentition.

11. Procédé selon l'une des revendications 2 à 10,
**caractérisé en ce que**
pendant l'enregistrement de la dentition ou de la dentition partielle, un plot d'étalonnage ayant des dimensions connues est agencé dans la zone d'enregistrement et il est également enregistré.

12. Procédé selon l'une des revendications 2 à 11,
**caractérisé en ce que**
le modèle virtuel inclut l'axe de rotation et/ou l'inclinaison horizontale du guidage condylien et/ou l'angle de Bennett et/ou la rétrusion et/ou le mouvement latéral immédiat (Immediate Sideshift) et/ou des guidages de glissement étagés de l'articulation temporo-mandibulaire.
